# FASCICULE DE BREVET EUROPEEN

(11) **EP 1 396 647 B1**
(45) Date de publication et mention de la délivrance du brevet: **04.07.2007**
(21) Numéro de dépôt: 03292184.3
(22) Date de dépôt: 05.09.2003
(51) Int. Cl.: F16B 21/08

(54) **Dispositif de fixation à quart de tour encliquetable**
Einrastbare Drehriegelvorrichtung
Snap-fit twist-lock device

(30) Priorité: 05.09.2002 FR 0210994
(43) Date de publication de la demande: 10.03.2004
(73) Titulaire: LEGRAND FRANCE, 87000 Limoges (FR); LEGRAND SNC, 87000 Limoges (FR)
(72) Inventeur: Daubisse, Laurent, 87510 Saint Jouvent (FR); Goudal, Jean-Paul, 87000 Limoges (FR); Moreau, Cédric, 87700 Aixe sur vienne (FR); Pourieux, Nicolas, 87270 Couzeix (FR)
(74) Mandataire: Santarelli

(56) Documents cités:
- EP-A- 0 863 315
- DE-A- 19 530 034
- US-A- 4 762 437

## Description

L'invention a trait à la fixation d'une pièce sur un support, à savoir à un dispositif de fixation suivant le préambule de la revendication indépendante. On connaît de nombreux exemples où cette fixation est réalisée au moyen d'un organe de fixation du type "quart de tour".

Un tel organe a pour fonction d'assurer un assemblage simple, rapide et démontable de pièces telles que capot, couvercle ou carter sur un support qui doit être recouvert ou qui comporte un orifice à masquer.

Cet organe de fixation est ainsi nommé pour signifier que l'opération de verrouillage ou de déverrouillage se fait par l'insertion ou le dégagement d'une dent de l'organe de fixation dans une encoche du support, ce mouvement étant permis par la rotation de l'organe de fixation, généralement d'un quart de tour.

Un tel organe de fixation comporte généralement un corps sensiblement cylindrique comprenant, à l'une de ses extrémités, une tête fendue et, à l'autre de ses extrémités, une dent saillant radialement et présentant une surface de contact perpendiculaire à l'axe longitudinal de l'organe de fixation.

Pour assurer sa fonction, cet organe de fixation est monté dans un orifice pratiqué dans la pièce à fixer, de manière que, lors de l'assemblage de cette pièce sur le support, la tête se positionne contre la surface externe de la pièce et que la dent soit angulairement positionnée pour ne pas interférer avec une surface d'arrêt prévue sur le support, perpendiculaire à la surface de contact.

Le verrouillage est ensuite assuré par la rotation de l'organe de fixation, à l'aide par exemple d'un tournevis introduit dans la fente de la tête, pour insérer la dent sous la surface d'arrêt du support, la pièce étant ainsi maintenue par l'intermédiaire de la tête de l'organe de fixation.

Ces dispositifs de fixation présentent un certain nombre d'inconvénients.

En effet, les dispositifs connus nécessitent, avant le montage de la pièce sur le support, un positionnement angulaire préalable de la dent.

L'utilisateur d'un tel dispositif doit donc contrôler la position de la dent en mettant en regard la pièce et le support. S'il s'aperçoit que la dent interfère avec la surface d'arrêt, il doit agir sur la tête pour provoquer une rotation de l'organe de fixation et ainsi positionner la dent hors de la zone angulaire dans laquelle elle risquerait de buter contre la surface d'arrêt du support lors du montage de la pièce sur le support.

De plus, une fois les éléments ainsi positionnés et le montage de la pièce effectué sur le support, les dispositifs connus nécessitent quoi qu'il en soit une rotation de l'organe de fixation pour verrouiller la dent contre la surface d'arrêt du support.

Cette rotation est commandée par une action sur la tête de l'organe de fixation, ceci impliquant que l'organe de fixation, ou du moins sa tête, doit être manipulable de l'extérieur une fois la pièce montée sur le support.

La tête de l'organe de fixation doit donc être accessible lors du montage, ce qui, par la nécessité d'un grand nombre d'opérations et une conformation particulière des différentes pièces, complique le montage.

L'invention vise à pallier notamment les inconvénients précités en fournissant un dispositif de fixation permettant le montage d'une pièce sur un support sans positionnement préalable d'un organe de fixation et permettant le verrouillage sans manipulation de la tête de l'organe de fixation.

A cet effet, l'invention porte sur un dispositif de fixation d'une pièce comportant une ouverture traversante sur un support comportant une surface d'arrêt au droit de ladite ouverture lorsque la pièce est montée sur le support, ce dispositif comprenant un organe de fixation qui comporte un corps allongé, une tête disposée à l'une des extrémités du corps pour son montage sur ladite pièce, ainsi qu'une dent qui est saillante du corps à son extrémité opposée à la tête et qui est propre à coopérer avec ladite surface d'arrêt, l'organe de fixation étant monté articulé sur ladite pièce entre une position dite de verrouillage dans laquelle ladite dent coopère avec ladite surface d'arrêt pour maintenir la pièce contre le support, et une position dite de déverrouillage dans laquelle ladite dent est dégagée de ladite surface d'arrêt pour permettre la séparation de la pièce et du support.

Selon l'invention telle que définie dans la revendication 1, des butées de fin de course sont prévues tant pour ladite position de verrouillage que pour ladite position de déverrouillage, et ledit corps est flexible élastiquement pour permettre la fixation de la pièce directement par encliquetage sur le support alors même que l'organe de fixation est dans sa position de verrouillage.

Il en résulte que, lors de la fixation de la pièce sur le support, l'organe de fixation reste en position verrouillée et s'encliquète sur la surface d'arrêt ce qui rend superflue toute manipulation de la tête.

Une telle manipulation n'intervient que lorsque l'on désire désolidariser la pièce du support en faisant passer l'organe de fixation dans sa position déverrouillée.

La pièce en question peut donc se présenter sous forme assemblée, les éventuels capots cachant les têtes étant en place, ce qui rend l'opération de montage sur le support très simple et rapide, l'opération de démontage se déroulant quant à elle de manière classique pour un dispositif à verrouillage "quart de tour".

On notera que l'on connaissait déjà, notamment par la demande de brevet allemand DE 195 30 034 et par le brevet américain 4,762,437 des organes de fixation pouvant se monter par simple encliquetage, comportant un corps fixe par rapport à la tête et des organes élastiques flexibles par rapport au corps se déformant lors de l'opération de montage.

On notera encore qu'on connaissait déjà par la demande de brevet européen EP 0 863 315 un organe de fixation dont une portion d'entretoise est flexible élastiquement pour opérer un encliquetage mais que l'organe de fixation est alors dans une position intermédiaire entre une position de déverrouillage et une position de verrouillage où la flexibilité de la partie d'entretoise est minimale.

Selon un mode de réalisation, l'organe de fixation est monté pivotant sur la pièce à fixer.

Selon un autre mode de réalisation, la largeur de la tête est supérieure au diamètre de l'ouverture traversante, de sorte que, lorsque l'organe de fixation est engagé complètement dans l'ouverture, la tête vient buter contre la paroi de la pièce à fixer.

Cette tête peut par ailleurs comprendre des moyens de prise en rotation pour permettre son entraînement en rotation.

Le corps de l'organe de fixation peut également s'étendre suivant son axe de rotation et l'axe de pivotement de l'organe de fixation peut être parallèle à la direction d'encliquetage.

Le dispositif de fixation selon l'invention peut en outre comprendre un collier saillant radialement du corps de l'organe de fixation, celui-ci étant monté sur la pièce à fixer de manière que la tête et le collier soient situés de part et d'autre de l'ouverture traversante.

En complément, ledit collier peut comprendre une échancrure dans laquelle prend place un téton saillant de la pièce à fixer, de manière à limiter la course angulaire de l'organe de fixation.

Par exemple, l'échancrure peut s'étendre suivant une ouverture angulaire inférieure à 180 degrés.

De même, l'échancrure peut s'étendre suivant une ouverture angulaire d'environ 90 degrés.

Par ailleurs, la surface d'arrêt peut être formée par un cran saillant du support et la dent peut comprendre un biseau apte à venir glisser sur une rampe de manière à fléchir le corps de l'organe de fixation lors de l'encliquetage.

Egalement dans un mode de réalisation, la pièce à fixer présentant une face externe tournée à l'opposé du support, la tête de l'organe de fixation présente une surface qui, lorsque l'organe est monté sur la pièce à fixer et est en position de verrouillage, affleure ladite face externe.

Dans un autre mode de réalisation, le dispositif de fixation comprend en outre un ressort interposé entre le support et la pièce et qui les sollicite en les écartant l'un de l'autre, le ressort pouvant être, par exemple, un joint élastique.

D'autres caractéristiques et avantages de l'invention apparaîtront à la lumière de la description qui va suivre d'un mode de réalisation donné à titre d'exemple non limitatif, description faite en référence aux dessins annexés dans lesquels :
- la figure 1 est une vue de dessus en perspective d'une pièce montée sur un support à l'aide de deux dispositifs de fixation selon l'invention ;
- la figure 2 est une vue suivant la coupe II-II de l'ensemble pièce support de la figure 1, un capot recouvrant la pièce ayant été ajouté ;
- la figure 3 est une vue suivant un détail matérialisé sur la figure 2 par l'encart III et montrant un organe de fixation en position verrouillée et encliquetée;
- la figure 4 est une vue similaire à la figure 3, l'organe de fixation étant en position verrouillée mais non encliquetée ;
- la figure 5 est une vue similaire à la figure 3, l'organe de fixation étant en position verrouillée et en cours d'encliquetage ;
- la figure 6 est une vue de droite selon la coupe VI-VI de la figure 3 ;
- la figure 7 est une vue similaire à la figure 3, l'organe de fixation étant en position déverrouillée ;
- la figure 8 est une vue schématique en perspective d'un organe de fixation seul ;
- la figure 9 est une vue de côté en coupe de l'organe de fixation de la figure 8 monté sur une pièce et encliqueté sur un support.

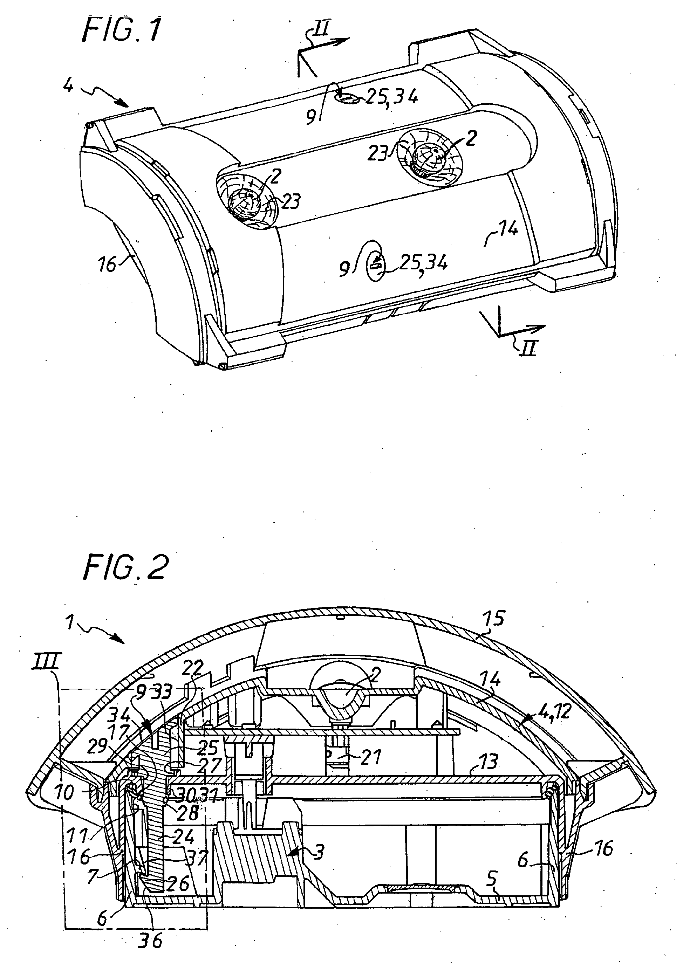

Les figures 1 et 2 représentent un bloc autonome d'éclairage de sécurité 1 dont la fonction est d'assurer un éclairage de secours à l'aide de batteries (non représentées) et d'ampoules 2.

Il comporte un socle 3 formant support sur lequel est montée une pièce 4 formant couvercle. Le support 3 a la forme d'une boîte comprenant un fond 5 et quatre parois latérales 6 rigidement fixées à ce fond 5 par leur tranche, cette boîte pouvant également être réalisée d'une seule pièce par moulage.

Le bloc autonome d'éclairage de sécurité 1 est destiné à être fixé de manière classique à une paroi (non représentée), par exemple à l'aide de vis traversant le fond 5 du support et vissées dans la paroi, le fond 5 du support étant plaqué contre la paroi.

Le support 3 comprend d'autre part deux crans 7 saillant transversalement vers l'intérieur de deux parois latérales 6 opposées et formant ainsi deux surfaces d'arrêt 8 destinées à coopérer chacune avec un organe de fixation 9 décrit ci-après.

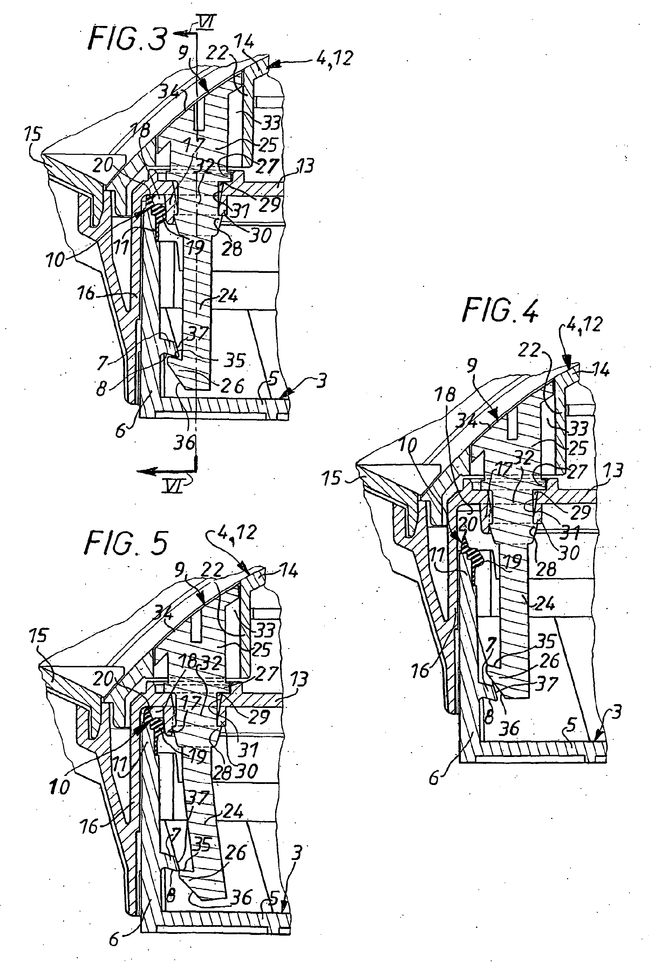

Le support 3 comprend également un joint 10 élastiquement déformable fixé, par exemple par collage, sur la tranche 11 de chacune des parois latérales 6, opposée au fond 5 du support (mieux visibles sur les figures 3 à 7).

Ce joint 10 crée une surépaisseur s'étendant au-delà de la tranche libre 11 des parois 6, le couvercle 4 venant le comprimer lors du montage sur le socle 3.

Le couvercle 4 forme un carter 12 recevant les éléments fonctionnels du bloc autonome d'éclairage de sécurité 1, carter délimité du côté du socle 3 par une paroi de fond 13 et, du côté opposé, par une cloison courbe 14 dont saillent les ampoules 2 et les éventuelles veilleuses.

Le couvercle 4 comprend en outre un capot de finition 15 transparent rapporté qui vient protéger les ampoules 2 et forme support pour une étiquette signalétique.

La paroi de fond 13, qui vient se plaquer contre la tranche 11 des parois 6 du socle 3, est prolongée par une jupe 16 formée de quatre parois latérales, comme le socle 3, de manière que le couvercle 4 puisse s'emboîter sur le socle 3, la jupe 16 venant recouvrir les parois latérales 6 de celui-ci (figures 2 à 7).

Le logement formé par la jupe 16 et la paroi de fond 13 comprend une nervure 17 saillant de la paroi de fond 13 vers le socle 3, nervure 17 qui court parallèlement à la jupe 16, à proximité de celle-ci.

La jupe 16 et la nervure 17 délimitent un logement périphérique 18 dans lequel vient se loger le joint 10 qui s'y trouve ainsi comprimé et y réalise l'étanchéité du volume interne du socle 3.

En outre, le joint élastique 10 comprend un bourrelet interne transversal 19 qui vient s'appliquer contre la nervure 17, ainsi qu'une lèvre 20 qui, s'étendant dans le prolongement des parois latérales 6 du support 3, vient s'appliquer contre la paroi de fond 13 pour solliciter le couvercle 4 en l'écartant du socle 3.

Le joint 10 étant fait d'un matériau élastique, il assure ainsi, par l'intermédiaire de cette lèvre 20, une fonction de ressort entre le couvercle 4 et le support 3.

A l'intérieur du carter 12 sont logées les douilles 21 des ampoules 2 de secours et des éventuelles veilleuses, la cloison 14 étant pourvue d'ouvertures 22 et de surfaces paraboliques 23 pour une bonne diffusion de la lumière.

Deux organes de fixation 9 sont rapportés sur le couvercle 4 pour la fixation de celui-ci au socle 3 (figures 2 à 7).

Ils comprennent chacun un corps 24 allongé, une tête 25 fendue à l'une des extrémités du corps 24 et une dent 26 saillant radialement du corps 24 à son extrémité opposée.

A la jonction entre la tête 25 et le corps 24 se trouve un premier épaulement 27, le corps 24 étant en outre pourvu d'une saillie annulaire 28 tronconique qui s'évase en direction de la tête 25.

Un trou traversant 29, adjacent à la nervure 17, est ménagé dans la paroi de fond 13 du couvercle 4, ce trou 29 étant délimité par une douille 30 sensiblement cylindrique saillant de la paroi de fond 13 vers le socle 3.

Cette douille 30 présente une face interne 31 tronconique propre à permettre l'encliquetage de l'organe de fixation 9, la douille 30 se déformant élastiquement lors du passage de la saillie annulaire tronconique 28 pour venir ensuite se loger dans l'espace complémentaire 32 ménagé entre la saillie 28 et l'épaulement 27.

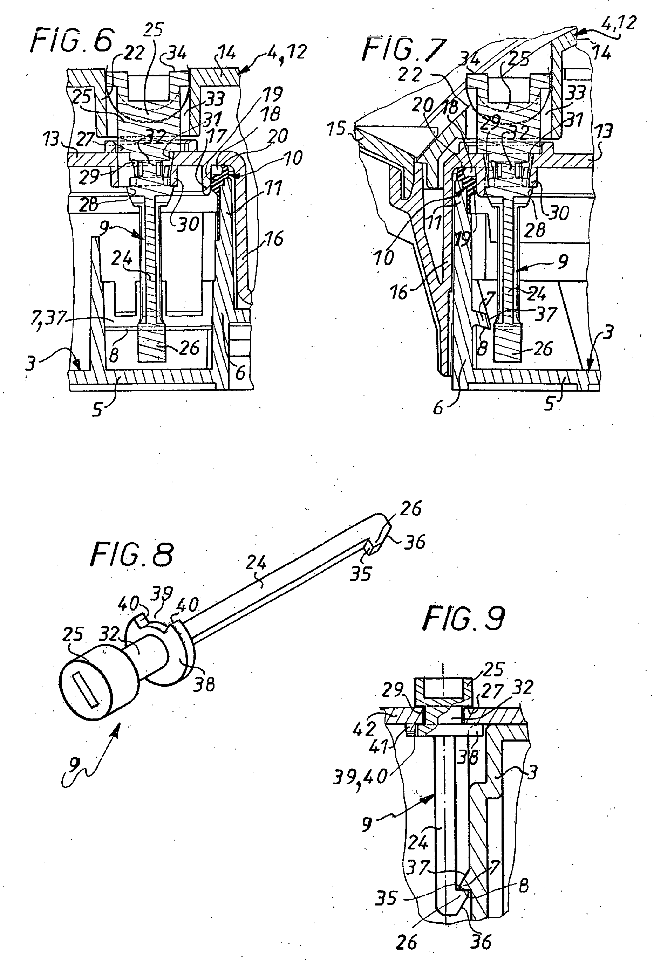

L'organe de fixation 9 se trouve alors monté à rotation sur le couvercle 4 autour d'un axe confondu avec l'axe de la douille 30 et parallèle à la direction d'emboîtement, entre une position de verrouillage (figure 3) dans laquelle la dent 26 est tournée vers le cran 7 lorsque le couvercle 4 est monté sur le socle 3, et une position de déverrouillage (figure 7) dans laquelle elle est écartée angulairement de la position de verrouillage de 90° au moins.

On manoeuvre l'organe de fixation 9 au moyen d'un outil tel qu'un tournevis dont on introduit la pointe dans la fente pratiquée dans la tête 25.

Par ailleurs, la tête 25 est reçue dans un logement cylindrique 33 ménagé dans la cloison courbe 14 du couvercle 4, laquelle présente, à l'opposé de la paroi de fond 13, une surface externe cylindrique qui, au voisinage du logement 33, est inclinée par rapport à la paroi de fond 13.

La tête 25 est également sensiblement cylindrique ; elle est toutefois biseautée et présente une surface d'extrémité 34 inclinée par rapport à un plan perpendiculaire à l'axe de l'organe de fixation 9, de telle sorte qu'en position de verrouillage de celui-ci, cette surface d'extrémité 34 affleure la face externe de la cloison courbe 14, tandis qu'en position de déverrouillage, cette surface d'extrémité 34 dépasse de la face externe.

L'utilisateur contrôle ainsi de l'extérieur la position dans laquelle se trouve l'organe de fixation 9.

La dent 26 saillant à l'extrémité de l'organe de fixation 9 présente une surface d'appui 35 tournée vers la tête 25 et destinée à coopérer avec la surface d'arrêt 8 du socle 3.

La dent 26 présente également, du côté opposé à cette surface d'appui 35, une surface oblique 36 formant un biseau dont la pointe est tournée vers l'extrémité du corps 24 opposée à la tête 25.

L'organe de fixation 9 présente ainsi une pointe biseautée 36 apte à coopérer avec le cran 7 du support 3 à des fins d'encliquetage.

Chaque cran 7 saillant des parois latérales 6 du support 3 présente quant à lui à cet effet une surface inclinée 37 formant une rampe sur laquelle vient glisser le biseau 36 de l'organe de fixation 9 (figures 4 et 5), celui-ci étant fait d'une matière élastique tel qu'un polymère permettant une flexion du corps 24 afin d'assurer que la dent 26 puisse se déplacer radialement par rapport à la tête 25 (figure 5).

Le dispositif de fixation décrit jusqu'alors fonctionne de la manière indiquée ci-après.

Le fond 5 du support 3 est tout d'abord fixé contre une paroi murale (ou un plafond) à l'aide de vis ou tout autre moyen de fixation.

Ses quatre parois latérales 6 saillent alors perpendiculairement à la paroi murale et sont ainsi prêtes à recevoir le couvercle 4.

Celui-ci se présente tel que montré à la figure 1, les organes de fixation 9 étant dans leur position de verrouillage qui, comme évoqué précédemment, assure la mise en regard de la dent 26 et du cran 7.

Le couvercle 4 peut ainsi être équipé de son capot de finition 15 avant même la fixation sur le support 3 puisque, cette fixation étant réalisée par encliquetage grâce au caractère déformable de l'organe de fixation 9, aucune intervention n'est nécessaire sur ce dernier.

Le capot de finition 15 étant monté sur le couvercle 4 (figure 2), celui-ci est assemblé au support 3 par emboîtement.

Au cours de l'emboîtement, les organes de fixation 9 atteignent la position représentée sur la figure 4, où la dent 26 vient rencontrer le cran 7 prévu sur le support 3.

Il suffit alors d'exercer un effort supplémentaire dans la direction d'encliquetage pour provoquer une flexion du corps 24 de l'organe de fixation 9 et un glissement du biseau 36 de la dent 26 sur la rampe 37 du cran 7 (figure 5), et parvenir à l'encliquetage du couvercle 4 sur le socle 3, la surface d'appui 35 de la dent 26 venant se placer sous la surface d'arrêt 8 du cran 7 (figure 3).

Cette position encliquetée est stable puisque le joint élastique 10, faisant office de ressort, tend à écarter la tranche 11 du fond du logement 18, maintenant ainsi la dent 26 plaquée contre le cran 7 dans la position de la figure 3.

Ce dispositif assure ainsi la fixation du couvercle 4 sur le support 3 par une simple opération d'encliquetage.

Par contre, pour séparer le couvercle 4 du support 3, en vue par exemple d'une intervention sur le couvercle 4 ou de son remplacement, il suffit de faire pivoter chaque organe de fixation 9 vers sa position de déverrouillage, par exemple à l'aide d'un tournevis, tel que nous l'avons vu, et de déboîter le couvercle 4 (figure 7).

Bien entendu, ceci nécessite l'accès à la tête 25, et donc la dépose du capot de finition 15.

Une amplitude angulaire de 90 degrés de l'organe de fixation 9, mesurée entre sa position de verrouillage et sa position de déverrouillage, est suffisante pour qu'en position de déverrouillage (figure 7), la dent 26 soit écartée du cran 7 pour permettre le déboîtement du couvercle 4.

Bien entendu, on peut choisir une amplitude de 180 degrés ou 270 degrés, un demi-tour ou trois quarts de tour de l'organe de fixation 9 permettant, à fortiori, le déverrouillage du couvercle 4.

Afin d'éviter toute imprécision lors de la manoeuvre de l'organe de fixation 9, il est prévu des butées de fin de course tant pour la position de verrouillage que pour la position de déverrouillage de l'organe de fixation 9, tel que représenté schématiquement sur les figures 8 et 9.

Ainsi, il est ménagé dans le collier 38 une échancrure 39 qui s'étend angulairement autour de l'axe de l'organe 9 suivant une ouverture égale à l'amplitude angulaire choisie pour l'organe de fixation 9 (figure 8).

Dans cette échancrure 39, qui présente deux surfaces terminales 40 de contact, vient se loger un téton 41 saillant de la paroi 42 du couvercle 4 pour limiter la course angulaire de l'organe de fixation 9 à l'amplitude choisie (figure 9).

Le téton 41 forme une butée contre laquelle viennent se plaquer l'une (en position de verrouillage) ou l'autre (en position de déverrouillage) des surfaces de contact 40 de l'échancrure 39.

## Revendications

1. Dispositif de fixation d'une pièce (4) comportant une ouverture traversante (29) sur un support (3) comportant une surface d'arrêt (8) au droit de ladite ouverture (29) lorsque la pièce (4) est montée sur le support (3), ce dispositif comprenant un organe de fixation (9) qui comporte un corps (24) allongé, une tête (25) disposée à l'une des extrémités du corps (24) pour son montage sur ladite pièce (4), ainsi qu'une dent (26) qui est saillante du corps (24) à son extrémité opposée à la tête (25) et qui est propre à coopérer avec ladite surface d'arrêt (8), l'organe de fixation (9) étant monté articulé sur ladite pièce (4) entre une position dite de verrouillage dans laquelle ladite dent (26) coopère avec ladite surface d'arrêt (8) pour maintenir la pièce (4) contre le support (3), et une position dite de déverrouillage dans laquelle ladite dent (26) est dégagée de ladite surface d'arrêt (8) pour permettre la séparation de la pièce (4) et du support (3), ce dispositif étant **caractérisé en ce que** des butées de fin de course (40) sont prévues tant pour ladite position de verrouillage que pour ladite position de déverrouillage et **en ce que** ledit corps (24) est flexible élastiquement pour permettre la fixation de la pièce (4) directement par encliquetage sur le support (3) alors même que l'organe de fixation (9) est dans sa position de verrouillage.

2. Dispositif de fixation selon la revendication 1, **caractérisé en ce que** l'organe de fixation (9) est monté pivotant sur la pièce (4) à fixer.

3. Dispositif de fixation selon la revendication 1 ou 2, **caractérisé en ce que** la largeur de la tête (25) est supérieure au diamètre de l'ouverture traversante (29), de sorte que, lorsque l'organe de fixation (9) est engagé complètement dans l'ouverture (29), la tête (25) vient buter contre la paroi (13) de la pièce (4) à fixer.

4. Dispositif de fixation selon la revendication 2 ou 3, **caractérisé en ce que** la tête (25) de l'organe de fixation (9) comprend des moyens de prise en rotation pour permettre son entraînement en rotation.

5. Dispositif de fixation selon les revendications 2 à 4, **caractérisé en ce que** le corps (24) de l'organe de fixation (9) s'étend suivant son axe de rotation.

6. Dispositif de fixation selon l'une des revendications 2 à 5, **caractérisé en ce que** l'axe de pivotement de l'organe de fixation (9) est parallèle à la direction d'encliquetage.

7. Dispositif de fixation selon l'une des revendications 2 à 6, **caractérisé en ce qu'**il comprend en outre un collier (28 ; 38) saillant radialement du corps (24) de l'organe de fixation (9), celui-ci étant monté sur la pièce (4) à fixer de manière que la tête (25) et le collier (28 ; 38) soient situés de part et d'autre de l'ouverture traversante (29).

8. Dispositif de fixation selon la revendication 7, **caractérisé en ce que** ledit collier (38) comprend une échancrure (39) dans laquelle prend place un téton (41) saillant de la pièce (4) à fixer, de manière à limiter la course angulaire de l'organe de fixation (9).

9. Dispositif de fixation selon la revendication 8, **caractérisé en ce que** l'échancrure (39) s'étend suivant une ouverture angulaire inférieure à 180 degrés.

10. Dispositif de fixation selon la revendication 9, **caractérisé en ce que** l'échancrure (39) s'étend suivant une ouverture angulaire d'environ 90 degrés.

11. Dispositif de fixation selon l'une des revendications 1 à 10, **caractérisé en ce que** la surface d'arrêt (8) est formée par un cran (7) saillant du support (3).

12. Dispositif de fixation selon l'une des revendications 1 à 11, **caractérisé en ce que** la dent (26) comprend un biseau (36) apte à venir glisser sur une rampe (37) de manière à fléchir le corps (24) de l'organe de fixation (9) lors de l'encliquetage.

13. Dispositif de fixation selon l'une des revendications 1 à 12, **caractérisé en ce que**, la pièce (4) à fixer présentant une face (14) externe tournée à l'opposé du support (3), la tête (25) de l'organe de fixation (9) présente une surface (34) qui, lorsque l'organe (9) est monté sur la pièce (4) à fixer et est en position de verrouillage, affleure ladite face externe (14).

14. Dispositif de fixation selon l'une des revendications 1 à 13, **caractérisé en ce qu'**il comprend en outre un ressort (10) interposé entre le support (3) et la pièce (4) et qui les sollicite en les écartant l'un de l'autre.

15. Dispositif de fixation selon la revendication 14, **caractérisé en ce que** le ressort est un joint élastique (10).

## Claims

1. A device for fixing a part (4) comprising a through opening (29) on a support (3) comprising a stop surface (8) opposite said opening (29) when the part (4) is mounted on the support (3), said device comprising a fixing member (9) which comprises an elongate body (24), a head (25) disposed at one of the ends of the body (24) for mounting thereof on said part (4), and a tooth (29) which is in projecting relationship from the body (24) at its end opposite to the head (26) and which is capable of co-operating with said stop surface (8), the fixing member (9) being mounted articulated to said part (4) between a position referred to as a locking position in which said tooth (26) co-operates with said stop surface (8) to hold the part (4) against the support (3) and a position referred to as an unlocking position in which said tooth (26) is disengaged from said stop surface (8) to permit separation of the part (4) and the support (3), said device being **characterised in that** travel-limiting abutments (40) are provided both for said locking position and for said unlocking position and that said body (24) is elastically flexible to permit fixing of the part (4) directly by latching engagement on the support (3) even when the fixing member (9) is in its locking position.

2. A fixing device according to claim 1 **characterised in that** the fixing member (9) is mounted pivotably on the part (4) to be fixed.

3. A fixing device according to claim 1 or claim 2 **characterised in that** the width of the head (25) is greater than the diameter of the through opening (29) in such a way that, when the fixing member (9) is completely engaged in the opening (29), the head (25) comes to bear against the wall (13) of the part (4) to be fixed.

4. A fixing device according to claim 2 or claim 3 **characterised in that** the head (25) of the fixing member (9) comprises rotational drive receiving means to permit it to be entrained in rotation.

5. A fixing device according to claims 2 to 4 **characterised in that** the body (24) of the fixing member (9) extends along its axis of rotation.

6. A fixing device according to one of claims 2 to 5 **characterised in that** the pivot axis of the fixing member (9) is parallel to the latching direction.

7. A fixing device according to one of claims 2 to 6 **characterised in that** it further comprises a collar (28; 38) projecting radially from the body (24) of the fixing member (9), the latter being mounted on the part (4) to be fixed in such a way that the head (25) and the collar (28; 38) are disposed on respective sides of the through opening (29).

8. A fixing device according to claim 7 **characterised in that** said collar (38) comprises a cut out (39) in which a projection (41) protruding from the part (4) to be fixed is received so as to limit the angular travel of the fixing member (9).

9. A fixing device according to claim 8 **characterised in that** the cut out (39) extends over an angular opening of less than 180 degrees.

10. A fixing device according to claim 9 **characterised in that** the cut out (39) extends over an angular opening of about 90 degrees.

11. A fixing device according to one of claims 1 to 10 **characterised in that** the stop surface (8) is formed by a detent (7) projecting from the support (3).

12. A fixing,device according to one of claims 1 to 11 **characterised in that** the tooth (26) comprises a bevel (36) capable of sliding against a ramp (37) so as to flex the body (24) of the fixing member (9) in the latching movement.

13. A fixing device according to one of claims 1 to 12 **characterised in that**, the part (4) to be fixed having an external face (14) facing in the opposite direction to the support (3), the head (25) of the fixing member (9) has a surface (34) which, when the member (9) is mounted on the part (4) to be fixed and is in the locking position, is flush with said external face (14),

14. A fixing device according to one of claims 1 to 13 **characterised in that** it further comprises a spring (10) which is interposed between the support (3) and the part (4) and which urges them away from each other.

15. A fixing device according to claim 14 **characterised in that** the spring is an elastic seal (10).

## Patentansprüche

1. Vorrichtung zum Befestigen eines Teils (4) mit einer durchgehenden Öffnung (29) auf einer Auflage (3), die gerade zu der Öffnung (29) eine Anschlagfläche (8) aufweist, wenn das Teil (4) auf der Auflage (3) angebracht wird, wobei die Vorrichtung ein Befestigungselement (9) umfasst, das einen länglichen Korpus (24), einen Kopf (25), der an einem der Enden des Korpus (24) zu dessen Anbringung an dem Teil (4) angeordnet ist, sowie eine Zacke (26) aufweist, die aus dem Korpus (24) an dessen dem Kopf (25) entgegengesetzten Ende vorsteht und mit der Anschlagfläche (8) zusammenzuwirken vermag, wobei das Befestigungselement (9) mit dem Teil (4) zwischen einer sogenannten Verriegelungsstellung, in welcher die Zacke (26) mit der Anschlagfläche (8) zusammenwirkt, um das Teil (4) gegen die Auflage (3) zu halten, und einer sogenannten Entriegelungsstellung, in welcher die Zacke (26) von der Anschlagfläche (8) gelöst ist, um das Teil (4) von der Auflage (3) trennen zu können, beweglich verbunden ist,
wobei die Vorrichtung **dadurch gekennzeichnet ist, dass** sowohl für die Verriegelungsstellung als auch für die Entriegelungsstellung Endanschläge (40) vorgesehen sind, und dass der Korpus (24) elastisch biegsam ist, um die Befestigung des Teils (4) durch Einrasten direkt auf der Auflage (3) zu ermöglichen, selbst wenn sich das Befestigungselement (9) in der Verriegelungsstellung befindet.

2. Befestigungsvorrichtung nach Anspruch 1,
**dadurch gekennzeichnet, dass** das Befestigungselement (9) auf dem zu befestigenden Teil (4) drehbar angebracht ist.

3. Befestigungsvorrichtung nach Anspruch 1 oder 2,
**dadurch gekennzeichnet, dass** der Kopf (25) breiter ist als der Durchmesser der durchgehenden Öffnung (29), so dass der Kopf (25) gegen die Wand (13) des zu befestigenden Teils (4) stößt, wenn das Befestigungselement (9) vollständig In die Öffnung (29) eingeführt ist.

4. Befestigungsvorrichtung nach Anspruch 2 oder 3,
**dadurch gekennzeichnet, dass** der Kopf (25) des Befestigungselements (9) drehbare Eingriffsmittel umfasst, um dessen Drehung zu ermöglichen.

5. Befestigungsvorrichtung nach den Ansprüchen 2 bis 4,
**dadurch gekennzeichnet, dass** sich der Korpus (24) des Befestigungselements (9) entlang dessen Drehachse erstreckt.

6. Befestigungsvorrichtung nach einem der Ansprüche 2 bis 5,
**dadurch gekennzeichnet, dass** die Drehachse des Befestigungselements (9) parallel zur Einrastrichtung verläuft.

7. Befestigungsvorrichtung nach einem der Ansprüche 2 bis 6,
**dadurch gekennzeichnet, dass** sie ferner einen Kragen (28; 38) aufweist, der aus dem Korpus (24) des Befestigungselements (9) radial vorsteht, wobei dieses auf dem zu befestigenden Teil (4) solchermaßen angebracht ist, dass der Kopf (25) und der Kragen (28; 38) zu beiden Seite der durchgehenden Öffnung (29) angeordnet Ist.

8. Befestigungsvorrichtung nach Anspruch 7,
**dadurch gekennzeichnet, dass** der Kragen (38) einen Ausschnitt (39) aufweist, In dem ein Zapfen (41), der aus dem zu befestigenden Teil (4) vorsteht, aufgenommen wird, um den Winkelversatz des Befestigungselements (9) zu begrenzen.

9. Befestigungsvorrichtung nach Anspruch 8,
**dadurch gekennzeichnet, dass** der Ausschnitt (39) gemäß einer Winkelöffnung von weniger als 180 Grad verläuft.

10. Befestigungsvorrichtung nach Anspruch 9,
**dadurch gekennzeichnet, dass** der Ausschnitt (39) gemäß einer Winkelöffnung von etwa 90 Grad verläuft.

11. Befestigungsvorrichtung nach einem der Ansprüche 1 bis 10,
**dadurch gekennzeichnet, dass** die Anschlagfläche (8) durch einen aus der Auflage (3) vorstehenden Rasthaken (7) gebildet ist.

12. Befestigungsvorrichtung nach einem der Ansprüche 1 bis 11,
**dadurch gekennzeichnet, dass** die Zacke (26) eine abgeschrägte Kante (36) aufweist, die auf einer Rampe (37) zu gleiten vermag, um den Korpus (24) des Befestigungselements (9) während des Einrastens zu biegen.

13. Befestigungsvorrichtung nach einem der Ansprüche 1 bis 12,
**dadurch gekennzeichnet, dass** der Kopf (25) des Befestigungselements (9) eine Fläche (34) aufweist, die, nach Anbringen des Befestigungselements (9) auf dem zu befestigenden Teil (4) in der Verriegelungsstellung mit einer Außenseite (14) bündig ist, die das zu befestigende Teil (4) an der der Auflage (3) abgewandten Seite aufweist.

14. Befestigungsvorrichtung nach einem der Ansprüche 1 bis 13,
**dadurch gekennzeichnet, dass** sie ferner eine Feder (10) umfasst, die zwischen der Auflage (3) und dem Teil (4) eingefügt ist und beide beansprucht, in dem sie diese auseinanderdrückt.

15. Befestigungsvorrichtung nach Anspruch 14,
**dadurch gekennzeichnet, dass** die Feder eine elastische Dichtung (10) ist.
